# EUROPÄISCHE PATENTSCHRIFT

(11) **EP 0 705 405 B1**
(45) Veröffentlichungstag und Bekanntmachung des Hinweises auf die Patenterteilung: **27.12.1996**
(21) Anmeldenummer: 94918295.0
(22) Anmeldetag: 22.06.1994
(51) Int. Cl.: F16L 37/252, E02D 29/12

(54) **VERROHRTES SCHACHTBAUWERK AUS GROSSROHREN**
PIT-SHAFT LINED WITH LARGE PIPES
PUITS ETAYE AVEC DES CONDUITS DE GRAND DIAMETRE

(30) Priorität: 26.06.1993 DE 9309553 U
(43) Veröffentlichungstag der Anmeldung: 10.04.1996
(73) Patentinhaber: PREUSSAG ANLAGENBAU GMBH, 30625 Hannover (DE)
(72) Erfinder: DERWAND, Helmut, D-78737 Fluorn-Winzeln (DE)
(74) Vertreter: Haar, Lucas H., Dipl.-Ing.
(86) Internationale Anmeldenummer: DE9400715
(87) Internationale Veröffentlichungsnummer: WO9500794

(56) Entgegenhaltungen:
- CH-A- 373 608
- FR-A- 1 168 602
- GB-A- 273 075

## Beschreibung

Die Erfindung betrifft ein verrohrtes Schachtbauwerk aus Großrohren mit einem Rohrverbinder, bestehend aus einer Rohrmuffe und einem in die Rohrmuffe einsteckbaren Rohrzapfen.

Zur Durchführung von Tiefbauarbeiten ist es vielfach erforderlich, begehbare Schächte abzuteufen, von deren Sohle aus die Tiefbauarbeiten durchgeführt werden können. Zum Abteufen und Sichern der Schachtbauwerke können Großrohre mit einem Durchmesser von etwa 2,5 m oder mehr eingesetzt werden. Aus Transportgründen ist die Länge derartiger Großrohre sehr begrenzt, so daß für tiefere Schachtbauwerke mehrere Großrohre miteinander zu verbinden sind.

Aufgabe der Erfindung ist es, ein verrohrtes Schachtbauwerk der eingangs genannten Art mit einem Rohrverbinder zu schaffen, der sich durch einfach Herstellbarkeit und einfache Montierbarkeit auszeichnet und der geeignet ist, hohe Zug- und Druckkräfte zu übertragen.

Erfindungsgemäß wird diese Aufgabe dadurch gelöst, daß zwischen der Rohrmuffe und dem Rohrzapfen ein Ringraum gebildet ist, in dem die Rohrmuffe auf ihrer Innenseite und der Rohrzapfen auf seiner Außenseite mehrere im gleichen Teilungsabstand voneinander entlang einer Umfangslinie angeordnete Abstützelemente mit Anlageflächen aufweisen, die jeweils in einer gemeinsamen, zur Rohrachse senkrechten Ebene liegen und daß zwischen den Abstützelementen Aussparungen vorgesehen sind, wobei die Umfangslänge der Aussparungen eines Bauteils, nämlich der Rohrmuffe oder des Rohrzapfens, die Umfangslänge der Abstützelemente des anderen Bauteils geringfügig übersteigt.

Der erfindungsgemäße Rohrverbinder zeichnet sich neben seiner einfachen Herstellbarkeit vor allem durch eine geringe axiale Baulänge und eine einfache Montage aus. Bei der Montage wird der Rohrzapfen in die Rohrmuffe eingeführt, wobei die Abstützelemente des Rohrzapfens durch die Aussparungen zwischen den Abstützelementen der Rohrmuffe hindurchtreten. In der eingeschobenen Endstellung des Rohrzapfens befinden sich dessen Abstützelemente axial innerhalb der Abstützelemente der Rohrmuffe. Durch eine Drehung des Rohrzapfens gegenüber der Rohrmuffe um ein dem halben Teilungsabstand der Abstützelemente entsprechendes Maß werden die Abstützelemente von Rohrzapfen und Rohrmuffe in axialer Richtung miteinander zur Deckung gebracht, so daß sie sich mit ihren Anlageflächen aneinander abstützen und dadurch eine in Zugrichtung formschlüssige Verbindung zwischen der Rohrmuffe und dem Rohrzapfen bilden. In Druckrichtung wird die formschlüssige Verbindung durch einen Ringbund an der Rohrmuffe oder dem Rohrzapfen gebildet, der die Einstecktiefe des Rohrzapfens gegenüber der Rohrmuffe begrenzt. Während in Druckrichtung der volle Wandquerschnitt von Rohrmuffe und Rohrzapfen zur Kraftübertragung zur Verfügung steht, kann in Zugrichtung etwa der halbe Ringquerschnitt zur Kraftübertragung herangezogen werden, so daß insgesamt eine sehr hohe Belastbarkeit des Rohrverbinders erreichbar ist.

Gemäß einer vorteilhaften Ausgestaltung der Erfindung kann vorgesehen sein, daß die Abstützelemente durch im wesentlichen quaderförmige Klötze gebildet sind, die unlösbar, beispielsweise durch Schweißen mit dem Rohrzapfen bzw. der Rohrmuffe verbunden sind. Die Rohrmuffe kann erfindungsgemäß durch den Endabschnitt eines Großrohres gebildet sein. Ferner kann der Ringbund zur Begrenzung der Einschubtiefe des Rohrzapfens durch den Endabschnitt eines mit dem Rohrzapfen verbundenen Großrohres gebildet sein.

Um den Rohrverbinder in seiner Schließstellung gegen ein unbeabsichtigtes Lösen zu sichern, kann erfindungsgemäß in der Rohrmuffe wenigstens ein Fenster zur Aufnahme eines Sicherungselements vorgesehen sein, das in eine Aussparung zwischen zwei Abstützelementen des Rohrzapfens eingreift. Vorzugsweise besteht das Sicherungselement aus einem quaderförmigen Klotz von größerer Dicke als die Abstützelemente, der mittels Schrauben in der Aussparung des Rohrzapfens befestigbar ist. Durch die Anordnung des Sicherungselements wird ein Verdrehen des Rohrzapfens gegenüber der Rohrmuffe in der Schließstellung des Rohrverbinders verhindert und dadurch gewährleistet, daß die Abstützelemente in ihrer Eingriffsstellung bleiben. Je nach Größe eines von dem Rohrverbinder aufzunehmenden Drehmoments können zwei oder mehr Sicherungselemente vorgesehen sein.

Nach einem weiteren Vorschlag der Erfindung kann der Ringbund zur Begrenzung der Einstecktiefe des Rohrzapfens gegenüber der Rohrmuffe in bezug auf die Abstützelemente derart positioniert sein, daß in der Schließstellung des Rohrverbinders Rohrmuffe und Rohrzapfen in axialer Richtung begrenzt gegeneinander bewegbar sind. Vorzugsweise beträgt die Größe der gegenseitigen, begrenzten axialen Bewegbarkeit von Rohrmuffe und Rohrzapfen in der Schließstellung etwa 1 % des Durchmessers des Rohrverbinders oder mehr. Diese begrenzte axiale Bewegbarkeit hat den Vorteil, daß ein aus mehreren Großrohren gebildeter Rohrstrang leichter gezogen werden kann, da die einzelnen Rohre in einem anstehenden Gebirge nacheinander frei gezogen werden können.

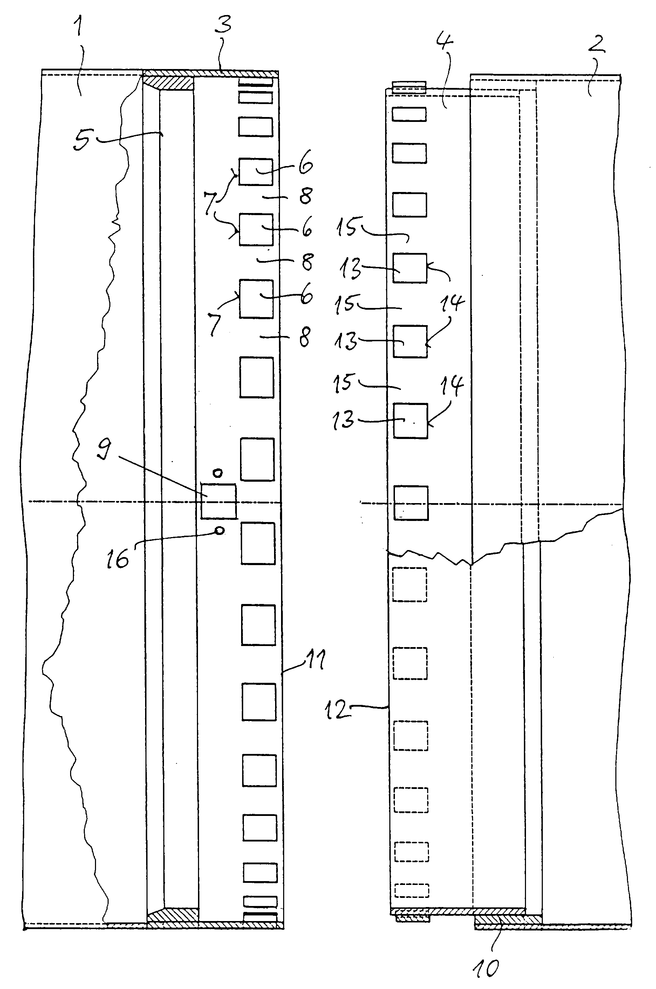

Die Erfindung wird nachfolgend anhand eines Ausführungsbeispiels näher erläutert, das in der Zeichnung dargestellt ist.

Die Zeichnung zeigt zwei einander zugekehrte Endabschnitte 1, 2 zweier Großrohre aus Metall, die durch einen aus einer Rohrmuffe 3 und einem Rohrzapfen 4 bestehenden Rohrverbinder miteinander verbindbar sind. Die Rohrmuffe 3 hat den gleichen Außendurchmesser wie der Endabschnitt 1 und ist mit diesem durch eine Schweißnaht verbunden. Auf ihrer Innenseite weist die Rohrmuffe 3 unmittelbar angrenzend an den Endabschnitt 1 einen Anschlagring 5 auf. In einem Abstand von dem Anschlagring und in gleichem Teilungsabstand voneinander sind auf der Innenseite der Rohrmuffe 3 durch im wesentlichen quaderförmige Klötze gebildete Abstützelemente 6 mit Anlageflächen 7 vorgesehen, die dem Anschlagring 5 zugekehrte, in einer gemeinsamen Radialebene liegende Anlageflächen 7 haben. Die Abstützelemente 6 sind durch Schweißen mit der Rohrmuffe 3 verbunden. Zwischen den Abstützelementen 6 sind Aussparungen 8 vorgesehen, deren Umfangslänge etwa der Umfangslänge der Abstützelemente 6 entspricht. In dem zwischen dem Anschlagring 5 und den Abstützelementen 6 vorhandenen freien Ringbereich der Rohrmuffe 3 sind in einem Winkelabstand von 180° zwei rechteckige Fenster 9 ausgeschnitten. Die Fenster 9 befinden sich jeweils in mittiger axialer Ausrichtung zu einer Aussparung 8.

Der Rohrzapfen 4 ist an dem Endabschnitt 2 des anderen Großrohrs mit Hilfe eines Zwischenrings 10 befestigt, der den Durchmesserunterschied zwischen dem Außendurchmesser des Rohrzapfens 4 und dem Innendurchmesser des Endabschnitts 2 ausgleicht. Der Zwischenring 10 ist hierbei jeweils mit dem Endabschnitt 2 und mit dem Rohrzapfen 4 verschweißt. Der Außendurchmesser des Rohrzapfens 4 ist so bemessen, daß der Rohrzapfen 4 in die durch die Abstützelemente 6 der Rohrmuffe 3 begrenzte Öffnung einsteckbar ist. Die aus dem Zwischenring 10 und dem Endabschnitt 2 hervorstehende axiale Länge des Rohrzapfens 4 entspricht dem Abstand des Anschlagrings 5 von der äußeren Stirnkante 11 der Rohrmuffe 3. Der aus dem Zwischenring 10 hervorstehende Teil des Rohrzapfens 4 ist daher vollständig in die Rohrmuffe 3 einsteckbar, wobei in der Endstellung die äußere Stirnkante 11 der Rohrmuffe 3 an dem Zwischenring 10 und der Stirnkante des Endabschnitts 2 und die äußere Stirnkante 12 des Rohrzapfens 4 an dem Anschlagring 5 anliegen. Auf seiner Außenfläche weist der Rohrzapfen 4 in einem Abstand von dem Zwischenring 10, der dem Abstand der Abstützelemente 6 von dem Anschlagring 5 entspricht, Abstützelemente 13 auf, die in Umfangsrichtung im gleichen Teilungsabstand voneinander angeordnet sind wie die Abstützelemente 6 und die eine dem Zwischenring 10 zugekehrte, in einer gemeinsamen radialen Ebene liegende Anlagefläche 14 haben. Zwischen den Abstützelementen 13 sind Aussparungen 15 vorgesehen, deren Umfangslänge etwas größer ist als die Umfangslänge der Abstützelemente 13. Entsprechend haben die Abstützelemente 13 eine etwas geringere Umfangslänge als die Abstützelemente 6. Sie bestehen ebenfalls aus im wesentlichen quaderförmigen Klötzen, die auf dem Rohrzapfen 4 aufgeschweißt sind.

Die Montage des beschriebenen Rohrverbinders erfolgt in folgender Weise:

Der Rohrzapfen 4 wird in der Zeichnung dargestellten Ausrichtung in die Rohrmuffe 3 hineingeschoben, wobei die Abstützelemente 13 durch die Aussparungen 8 und die Abstützelemente 6 durch Aussparungen 15 hindurchtreten. Sobald die Rohrmuffe 3 und der Rohrzapfen 4 vollständig ineinandergreifen, werden beide Großrohre um ein dem halben Umfangsabstand der Abstützelemente 6, 13 entsprechendes Maß derart gegeneinander verdreht, daß die Gewindebohrungen 16 in den Bereich der Fenster 9 gelangen. Die Abstützelemente 6, 13 werden hierdurch miteinander zur Deckung gebracht, so daß sich die Anlageflächen 7, 14 unmittelbar gegenüberliegen und miteinander in Eingriff treten können. Wird die so hergestellte Rohrverbindung auf Zug belastet, so wird die Zugkraft von den Abstützelementen 6, 13 übertragen, wobei diese auf Grund ihrer Größe und der dementsprechend großen Länge der sie haltenden Schweißnähte außerordentlich hohe Kräfte übertragen können. Druckbelastungen werden unmittelbar von den Stirnkanten 11, 12 auf den Anschlagring 5 bzw. den Zwischenring 10 übertragen.

Zur Sicherung des Rohrverbinders in der beschriebenen Verriegelungsstellung wird in die Fenster 9 jeweils ein durch einen quaderförmigen Klotz gebildetes Sicherungselement eingesetzt und mit Hilfe von in Gewindebohrungen 16 auf beiden Seiten der Fenster 9 eingeschraubten Schrauben gehalten. Auf diese Weise werden Rohrmuffe und Rohrzapfen aneinander gegen Verdrehen gesichert und die Abstützelemente 6, 13 in ihrer Eingriffslage gehalten.

Die Anlageflächen 7, 14 der Abstützelemente 6, 13 haben von dem Anschlagring 5 bzw. dem Zwischenring 10 einen größeren Abstand als von den Stirnkanten 11, 12. Hierdurch ergibt sich in axialer Richtung ein Bewegungsspiel, das ohne Beeinträchtigung der Belastbarkeit des Rohrverbinders eine begrenzte axiale Relativbewegung zwischen den Endabschnitten 1, 2 ermöglicht. Vorzugsweise wird das Spiel so groß bemessen, daß die Größe der axialen Relativbewegung etwa 1 % des Außendurchmessers der Rohrmuffe 3 beträgt. Hierdurch ist es möglich, die in eine Bohrung eingebauten, in axialer Richtung fest aufeinandersitzenden Rohre eines Schachtbauwerks beim Ausbau nacheinander freizuziehen, wodurch die anfängliche Zugkraft zum Herausziehen der Schachtrohre erheblich kleiner ausfällt und dadurch das Ausbauen der Rohre sehr erleichtert.

## Patentansprüche

1. Verrohrtes Schachtbauwerk aus Großrohren mit einem Rohrverbinder, bestehend aus einer Rohrmuffe und einem in die Rohrmuffe einsteckbaren Rohrzapfen, dadurch gekennzeichnet, daß zwischen der Rohrmuffe (3) und dem Rohrzapfen (4) ein Ringraum gebildet ist, in dem die Rohrmuffe (3) auf ihrer Innenseite und der Rohrzapfen (4) auf seiner Außenseite mehrere in gleichem Teilungsabstand voneinander entlang einer Umfangslinie angeordnete Abstützelemente (6, 13) mit Anlageflächen (7, 14) aufweisen, die jeweils in einer gemeinsamen, zur Rohrachse senkrechten Ebene liegen und daß zwischen den Abstützelementen (6, 13) Aussparungen (8, 15) vorgesehen sind, wobei die Umfangslänge der Aussparungen (8 bzw. 15) eines Bauteils, nämlich der Rohrmuffe (3) oder des Rohrzapfens (4) die Umfangslänge der Abstützelemente (13 bzw. 6) des anderen Bauteils geringfügig übersteigt.

2. Schachtbauwerk nach Anspruch 1, dadurch gekennzeichnet, daß die Abstützelemente (6, 13) durch im wesentlichen quaderförmige Klötze gebildet sind, die unlösbar, beispielsweise durch Schweißen mit der Rohrmuffe (3) bzw. dem Rohrzapfen (4) verbunden sind.

3. Schachtbauwerk nach einem der vorhergehenden Ansprüche, dadurch gekennzeichnet, daß die Rohrmuffe (3) durch den Endabschnitt eines Großrohres gebildet ist.

4. Schachtbauwerk nach einem der vorhergehenden Ansprüche, dadurch gekennzeichnet, daß zur Begrenzung der Einschubtiefe des Rohrzapfens (4) durch den Endabschnitt (2) eines mit dem Rohrzapfen (4) verbundenen Großrohres ein an die Rohrmuffe (3) anlegbarer Ringbund (5) gebildet ist.

5. Schachtbauwerk nach einem der vorhergehenden Ansprüche, dadurch gekennzeichnet, daß in der Rohrmuffe (3) ein Fenster (9) zur Aufnahme eines Sicherungselements vorgesehen ist, das in einer Aussparung (15) zwischen zwei Abstützelementen (13) des Rohrzapfens (4) eingreift.

6. Schachtbauwerk nach Anspruch 5, dadurch gekennzeichnet, daß das Sicherungselement aus einem quaderförmigen Klotz besteht, dessen Dicke größer ist als die Dicke der Abstützelemente (13) und der durch lösbare Mittel in einer Aussparung (15) des Rohrzapfens (4) befestigbar ist.

7. Schachtbauwerk nach einem der vorhergehenden Ansprüche, dadurch gekennzeichnet, daß die Abstützelemente (6, 13) in Bezug auf die Begrenzung der Einstecktiefe des Rohrzapfens (4) gegenüber der Rohrmuffe (3) derart positioniert sind, daß in der Schließstellung des Rohrverbinders die Rohrmuffe (3) und der Rohrzapfen (4) in axialer Richtung begrenzt gegeneinander bewegbar sind.

8. Schachtbauwerk nach Anspruch 7, dadurch gekennzeichnet, daß die Größe der gegenseitigen, begrenzten axialen Bewegbarkeit von Rohrmuffe (3) und Rohrzapfen (4) in der Schließstellung etwa 1 % des Durchmessers des Rohrverbinders oder mehr beträgt.

## Claims

1. A shaft-construction cased with large pipes and comprising a pipe union consisting of a bell and of a spigot insertable into the bell, characterized in that an annular space is subtended between the bell (3) and the spigot (4), and in that within said annular space the bell (3) comprises several circumferentially equidistant support elements (6) on its inside and in that the spigot comprises several circumferentially equidistant support elements (13) on its outside, said support elements (6, 13) being fitted with rest surfaces (7, 14) arrayed in a common plane perpendicular to the pipe axis, and in that clearances (8, 15) are present between the support elements (6, 13), the circumferential length of clearances (8, 15) of one component, namely of the bell (3) and resp. the spigot (4) slightly exceeding the circumferential length of the support elements resp. (13, 6) of the other component.

2. Shaft construction defined in claim 1, characterized in that the support elements (6, 13) consist of essentially parallelepipedic blocks joined in undetachable manner for instance by welding to the bell (3) and the spigot (4) resp.

3. Shaft construction defined in one of above claims, characterized in that the bell (3) is constituted by the end segment of a large pipe.

4. Shaft construction defined in one of the above claims, characterized in that to limit the depth of insertion of the spigot (4) by means of the end segment connected to said spigot (4) an annular shoulder is formed on the bell (3).

5. Shaft construction defined in one of the above claims, characterized in that a window (9) receiving a securing element is formed in the bell (3), said securing element entering a clearance (15) between two support elements (13) of the spigot (4).

6. Shaft construction defined in claim 5, characterized in that the securing element consists of a parallelepipedic block of which the thickness is larger than that of the support elements (13) and which is affixable by detachable means in a clearance (15) of the spigot (4).

7. Shaft construction defined in one of the above claims, characterized in that the support elements (6, 13) are so positioned with respect to limiting the depth of insertion between the spigot (4) and the bell (3) that when the union is in the closed position, the bell (3) and the spigot (4) are relatively displaceable in limited manner in the axial direction.

8. Shaft construction defined in claim 7, characterized in that the magnitude of the relative, axially limited displaceability of the bell (3) and the spigot (4) in said closed position is approximately 1% or more of the diameter of the pipe union.

## Revendications

1. Puits tubé constitué de tubes de grand diamètre, comportant un raccord de tubes, constitué d'un manchon tubulaire et d'un tenon tubulaire pouvant être emboîté dans le manchon tubulaire, caractérisé en ce que, entre le manchon tubulaire (3) et le tenon tubulaire (4), est défini un espace annulaire dans lequel le manchon tubulaire (3) présente sur sa face intérieure, et le tenon tubulaire (4) présente sur sa face extérieure, plusieurs éléments d'appui (6, 13) disposés suivant le même écartement mutuel, le long d'une circonférence, et dotés de surfaces de contact (7, 14), qui sont, dans chaque cas, situées dans un plan commun, perpendiculaire à l'axe du tube, et en ce qu'entre les éléments d'appui (6, 13) sont prévus des évidements (8, 15), la longueur, dans le sens de la circonférence, des évidements (8, respectivement 15) d'un élément de construction, à savoir le manchon tubulaire (3) ou le tenon tubulaire (4), étant légèrement supérieure à la longueur, dans le sens de la circonférence, des éléments d'appui (13, respectivement 6) de l'autre élément de construction.

2. Puits selon la revendication 1, caractérisé en ce que les éléments d'appui (6, 13) sont constitués par des plots sensiblement parallélépipédiques, qui sont reliés de façon indésolidarisable, par exemple par soudage, au manchon tubulaire (3), respectivement au tenon tubulaire (4).

3. Puits selon l'une des revendications précédentes, caractérisé en ce que le manchon tubulaire (3) est constitué par la partie d'extrémité d'un tube de grand diamètre.

4. Puits selon l'une des revendications précédentes, caractérisé en ce que, pour limiter la profondeur d'enfoncement du tenon tubulaire (4) dans la partie d'extrémité (2) d'un tube de grand diamètre relié au tenon tubulaire (4), est formée une collerette annulaire (5) pouvant être appliquée sur le manchon tubulaire (3).

5. Puits selon l'une des revendications précédentes, caractérisé en ce que, dans le manchon tubulaire (3), est prévue une fenêtre (9), destinée à recevoir un élément de sécurité qui s'engage dans un évidement (15) ménagé entre deux éléments d'appui (13) du tenon tubulaire (4).

6. Puits selon la revendication 5, caractérisé en ce que l'élément de sécurité est constitué d'un plot parallélépipédique, dont l'épaisseur est supérieure à l'épaisseur des éléments d'appui (13) et qui peut être fixé à l'aide de moyens désolidarisables dans un évidement (15) du tenon tubulaire (4).

7. Puits selon l'une des revendications précédentes, caractérisé en ce que les éléments d'appui (6, 13) sont positionnés, à l'égard de la limitation de la profondeur d'enfoncement du tenon tubulaire (4) par rapport au manchon tubulaire (3), d'une manière telle que, dans la position de fermeture du raccord de tubes, le manchon tubulaire (3) et le tenon tubulaire (4) soient déplaçables l'un par rapport à l'autre de façon limitée en direction axiale.

8. Puits selon la revendication 7, caractérisé en ce que l'amplitude de la mobilité axiale limitée mutuelle entre le manchon tubulaire (3) et le tenon tubulaire (4), dans la position de fermeture, est d'environ 1 % du diamètre du raccord de tubes, ou plus.
